# EUROPÄISCHE PATENTSCHRIFT

(11) **EP 1 043 537 B1**
(45) Veröffentlichungstag und Bekanntmachung des Hinweises auf die Patenterteilung: **11.12.2002**
(21) Anmeldenummer: 00890104.3
(22) Anmeldetag: 29.03.2000
(51) Int. Cl.: F16L 37/12

(54) **Druckmittelsystem, Druckmittelzylinder und Halteklammer**
Pressure system, pressure cylinder and security clip
Système sous pression, verin et bride de fixation

(30) Priorität: 07.04.1999 AT 23099 U
(43) Veröffentlichungstag der Anmeldung: 11.10.2000
(73) Patentinhaber: Hoerbiger Hydraulik GmbH, 86956 Schongau (DE)
(72) Erfinder: Schmied, Peter, 86956 Schongau (DE); Schleich, Gisela, 86986 Schwabbruck (DE); Kainzmeier, Herbert, 86972 Altenstadt (DE); Schönfelder, Gunther, 86978 Hohenfurch (DE)
(74) Vertreter: Laminger, Norbert, Mag.

(56) Entgegenhaltungen:
- EP-A- 0 724 108
- DE-A- 3 014 066
- DE-A- 4 237 481
- DE-A- 4 415 841
- DE-C- 4 209 000
- FR-A- 2 592 702
- US-A- 4 938 510
- US-A- 5 046 765

## Beschreibung

Die Erfindung betrifft eine Halteklammer zur Fixierung eines in den Druckmittelanschluß eines Druckmittelzylinders einsetzbaren Endstückes einer Druckmittelleitung, wobei der Druckmittelanschluß mit einer umlaufenden Aussparung versehen ist.

Bei vielen üblichen hydraulischen Druckmittelsystemen wird der Schlauch zur Zu- oder Ableitung des Druckmittels, insbesondere in hydraulischen Betätigungsanordnungen, etwa im Fahrzeugbau, mittels Verpressen fest mit einem Anschluss verbunden, der am Zylinder oder dessen Boden oder Deckel vorgesehen ist. Ein Lösen dieser Verbindung ist dann nur mehr unter Zerstörung des Schlauchendes oder des Anschlusses möglich. Bei einem Defekt an der Verbindungsleitung oder dem Zylinder muss daher immer die komplette Zylinder-Schlauch-Einheit ausgewechselt werden. Speziell im Fahrzeugbau ist durch die immer komplexer werdenden Aufbauten und Verlegungen, insbesondere in den neuen Verdecken von Cabrios oder für Heckdeckel od. dgl., im Austauschfall ein immenser Aufwand zu betreiben. So werden beispielsweise oftmals die Schläuche fest mit der Verdeckplane verklebt, so dass bei Austausch die komplette Zerlegung des Verdecks nötig wird.

Um ein System zu erhalten, welches ohne großen Aufwand und bei wirtschaftlicher Herstellung die Montage und Demontage, selbst nach dem Einbau des Systems in beispielsweise Fahrzeugen, möglich macht, wurde vorgeschlagen, einen Druckmittelzylinder mit zumindest einer mit einem einsteckbaren Endstück versehenen Druckmittelleitung für die Zu- und/oder Abführung des Druckmittels zu verbinden, wobei eine abnehmbare Halteklammer den Druckmittelanschluß als auch das in diesen Anschluß eingesetzte Endstück der Druckmittelleitung außen umgreift. Damit ist, wie etwa in der DE-A-44 15 841 geoffenbart, die einfache Montage und auch Demontage auch im eingebauten Zustand gewährleistet, die Komponenten können unabhängig voneinander auch zu unterschiedlichen Zeiten oder durch unterschiedliche Hersteller in das komplette System eingebaut und/oder ausgetauscht werden.

Die bislang vorgeschlagenen Ausführungen für die Halteklammern zur Verbindung von Zylindern mit Arbeitsleitungen sind im wesentlichen von ähnlicher Konstruktion und weisen, siehe beispielsweise die DE-A-44 15 841, zwei aus der Grundfläche heraus umgebördelte Fortsätze auf, welche einen Ringbund am Anschlußstück hintergreifen (auch im Fall der DE-C-42 09 000) oder in Nuten eingreifen, wie etwa in der US-A-4,938,510 oder der DE-A-30 14 066 offenbart.

Um gegenüber diesen bekannten Halteklammern eine ebenfalls konstruktiv einfache Ausführung bei verbesserter und noch sichererer Haltewirkung zu erzielen, ist gemäß der vorliegenden Erfindung eine Konstruktion vorgeschlagen, die zwei im wesentlichen parallele Seitenteile mit in die umlaufende Ringnut eingreifenden Strukturen aufweist, welche durch ein gebogenes Zwischenstück miteinander verbunden sind, von welchem auch ein Oberteil ausgeht, welches mit einem Schlitz für das Endstück der Druckmittelleitung und mit zwei seitlichen Laschen versehen ist, welche Laschen durch Langlöcher oder Schlitze in den Seitenteilen der Halteklammer hindurchreichen.

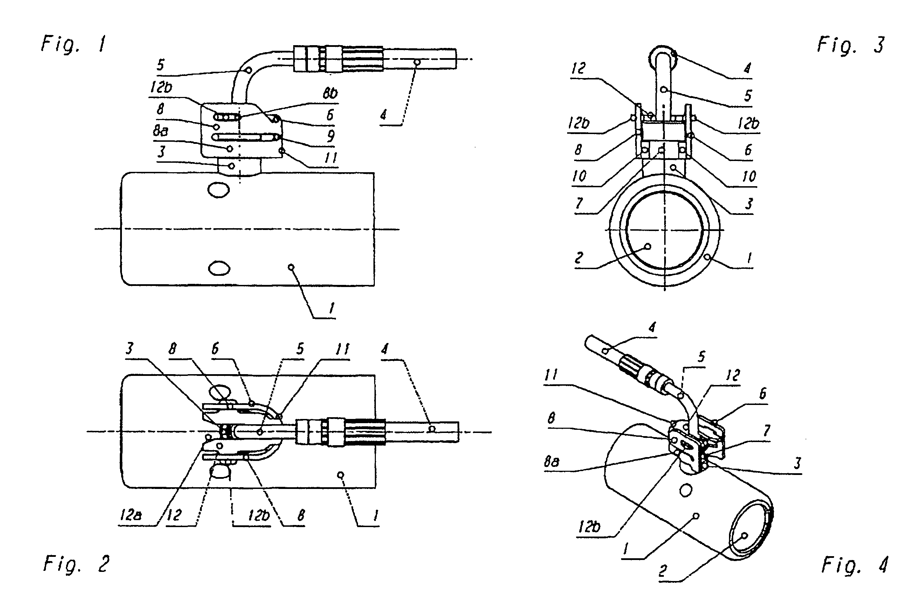

Unter Bezugnahme auf die beigefügten Zeichnungen soll die Erfindung anhand eines Ausführungsbeispiels näher erläutert werden. Die Fig.1 zeigt eine Seitenansicht eines Endstückes eines erfindungsgemäßen Druckmittelzylinders mit lösbar angeschlossener Druckmittelleitung, Fig. 2 ist eine Draufsicht auf das Endstück der Fig. 1, Fig. 3 stellt eine Vorderansicht aus axialer Richtung und Fig. 4 eine perspektivische Ansicht dieses Endstückes dar.

An einem Zylinderrohr 1, beispielsweise mit integriertem Boden 2 und/oder Deckel ist ein Druckmittelanschluss 3 für die Zu- und/oder Ableitung des Druckmittels, insbesondere eines Hydrauliköls, separat auf das Zylinderrohr durch Bolzenschweißen aufgesetzt. Das nach DIN-Norm dem Lichtbogenpressschweißen zuzuordnende Bolzenschweißen selbst ist als moderne Befestigungs- bzw. Verbindungstechnik heutzutage in der gesamten metallverarbeitenden Industrie in verschiedensten Zusammenhängen in Verwendung. Je nach Anwendungsfall und Anforderungen sind verschiedene Verfahrensvarianten im Einsatz, wobei zumindest Lichtbogenschweißen mit Hubzündung verwendet wird. Es handelt sich insgesamt um ein einfach und präzise durchzuführendes Verfahren, mit dem sehr kostengünstig gearbeitet werden kann. Das Zylinderrohr 1 braucht vor dem Anbringen der Druckmittelanschlüsse 3 - abgesehen von Entgratungen und dgl. - nicht bearbeitet werden. Als besonders vorteilhaft hat sich eine Ausführung des Herstellungsverfahrens erwiesen, gemäß welchem die für die Druckmittelanschlüsse 3 aufgesetzten Teile vor dem Zusammenbau ebenso wie das Zylinderrohr 1 an dieser Stelle bohrungslos sind und erst nach dem Schweißen mit den auch das Zylinderrohr 1 durchsetzenden Anschlussbohrungen versehen werden. Diese Anschlussbohrungen können entweder spanlos (beispielsweise gedrückt oder gestanzt) oder mittels üblicher spanabhebender Techniken (Bohren, Fräsen od. dgl.) hergestellt werden.

Eine Druckmittelleitung 4 ist mit einem vorzugsweise im wesentlichen 90-gradig abgebogenen Endstück 5 versehen, welches Endstück 5 in eine Bohrung des Druckmittelanschlusses 3 eingesteckt und dort durch die Halteklammer 6 fixiert werden kann. Dabei ist durch vorzugsweise rotationssymmetrische Ausbildung der Bohrung im Druckmittelanschluss 3 und des Endstückes 5 gewährleistet, dass die Druckmittelleitung 4 in beliebiger Orientierung am Druckmittelzylinder 1 angebracht und auch nachträglich noch verschwenkt werden kann. Vorteilhafterweise ist das Endstück 5 biegsam ausgeführt, sodass auch der Winkel zwischen der Achse des Druckmittelzylinders 1 und dem Beginn der Druckmittelleitung 4 hinter dem Endstück 5 frei angepasst werden kann.

An der äußeren, im wesentlichen zylindrischen Mantelfläche des Druckmittelanschlusses 3 ist eine umlaufende Ringnut 7 vorgesehen, welche zum Zusammenwirken mit der Halteklammer 6 bestimmt ist. Diese Halteklammer 6 hat in ihrer dargestellten, vorteilhaften Ausführung zwei im wesentlichen parallele Seitenteile 8, in denen ein Langloch 9 oder ein Schlitz in Längsrichtung der Seitenteile 8 verläuft und die Seitenteile 8 in einen oberen Streifen und einen unteren Streifen 8a unterteilt. Beide unteren Streifen 8a sind mit in die umlaufende Ringnut 7 eingreifenden Strukturen, beispielsweise Vorsprüngen oder Ausbuchtungen 10 versehen oder selbst derart ausgebildet, so dass ein Abziehen der Halteklammer 6 in axialer Richtung des Druckmittelanschlusses 3 nicht möglich ist. Durch geeignete Dimensionierung und Formgebung der Ausbuchtungen 10 ist ein Aufschnappen und Halten der Halteklammer 6 um den Druckmittelanschluss machbar.

Die beiden Seitenteile 8 sind durch ein gebogenes Zwischenstück 11 miteinander in Verbindung, von welchem Zwischenstück 11 auch ein Oberteil 12 ausgeht, welches mit einem Schlitz 12a versehen ist, in dem das Endstück 5 der Druckmittelleitung zu liegen kommt. Der Schlitz 12a ist dabei so bemessen, dass eine vorzugsweise umlaufende Auskragung des Endstückes 5 sicher unter dem Oberteil 12 gehalten und das Endstück 5 derart in der in den Druckmittelanschluss 3 eingesteckten Position fixiert wird. Um dabei ein Aufbiegen des Oberteils 12 bei Krafteinwirkung im Sinne eines Herausziehens des Endstückes 5 aus dem Druckmittelanschluss 3 zu verhindern, ist das Oberteil 12 mit zwei seitlichen Laschen 12b versehen, die durch Langlöcher oder Schlitze 8b in den Seitenteilen 8 der Halteklammer 6, vorzugsweise deren oberen Streifen, hindurchreichen. Die Halteklammer 6 ist somit auch ohne spezielles Werkzeug aufsetz- und abnehmbar.

## Patentansprüche

1. Halteklammer zur Fixierung eines in den Druckmittelanschluß (3) eines Druckmittelzylinders (1) einsetzbaren Endstückes (5) einer Druckmittelleitung (4), wobei der Druckmittelanschluß (3) mit einer umlaufenden Aussparung (7) versehen ist, **dadurch gekennzeichnet, daß** zwei im wesentlichen parallele Seitenteile (8) der Halteklammer (6) mit in die umlaufende Ringnut (7) eingereifenden Strukturen vorgesehen sind, welche durch ein gebogenes Zwischenstück (11) miteinander verbunden sind, von welchem auch ein Oberteil (12) ausgeht, welches mit einem Schlitz (12a) für das Endstück (5) der Druckmittelleitung (4) und mit zwei seitlichen Laschen (12b) versehen ist, welche Laschen (12b) durch Langlöcher oder Schlitze (8b) in den Seitenteilen (8) der Halteklammer (6) hindurchreichen.

## Claims

1. A retaining clamp for securing an end piece (5) of a pressure medium line (4) insertable into the pressure medium connection (3) of a cylinder (1) supplied with pressure medium, whereby the pressure medium connection (3) is provided with a peripheral recess (7),
**characterized in that**
two essentially parallel side parts (8) of the retaining clamp (6) are provided with structures engaging in the peripheral ring groove (7), these structures being joined to one another by a curved connecting piece (11), from which a top part (12) also proceeds, this top part being provided with a slot (12a) for the end piece (5) of the pressure medium line (4) and with two lateral straps (12b), said straps (12b) passing through elongated holes or slots (8b) in the side parts (8) of the retaining clamp (6).

## Revendications

1. Pince de maintien pour fixer un embout (5) d'une conduite à fluide sous pression (4) susceptible d'être introduit dans le raccord à fluide sous pression (3) d'un vérin à fluide sous pression (1), le raccord à fluide sous pression (3) étant pourvu d'une échancrure périphérique (7), **caractérisée en ce que** deux parties latérales (8) sensiblement parallèles de la pince de maintien (6) sont pourvues de structures qui s'engagent dans la gorge annulaire périphérique (7) et qui sont reliées l'une à l'autre par une pièce intermédiaire cintrée (11) de laquelle part également une pièce supérieure (12) qui est pourvue d'une fente (12a) pour l'embout (5) de la conduite à fluide sous pression (4) et de deux pattes latérales (12b), lesdites pattes (12b) traversant des trous oblongs ou des fentes (8b) dans les parties latérales (8) de la pince de maintien (6).
